# EUROPEAN PATENT SPECIFICATION

(11) **EP 3 576 394 B1**
(45) Date of publication and mention of the grant of the patent: **02.08.2023**
(21) Application number: 18828637.1
(22) Date of filing: 21.06.2018
(51) Int. Cl.: H04M 3/58, H04M 1/00, H04M 3/42, G10L 15/26, H04M 1/80

(54) **TELEPHONE SYSTEM, TELEPHONE, CALL TRANSFER METHOD, AND PROGRAM**
TELEFONSYSTEM, TELEFON, ANRUFWEITERLEITUNGSVERFAHREN UND PROGRAMM
SYSTÈME TÉLÉPHONIQUE, TÉLÉPHONE, PROCÉDÉ DE TRANSFERT D'APPEL ET PROGRAMME

(30) Priority: 05.07.2017 JP 2017131790
(43) Date of publication of application: 04.12.2019
(73) Proprietor: NEC Platforms, Ltd., Kawasaki-shi, Kanagawa 213-8511 (JP)
(72) Inventor: KOMINE Yuichi, Kawasaki-shi Kanagawa 213-8511 (JP)
(74) Representative: Vossius & Partner Patentanwälte Rechtsanwälte mbB
(86) International application number: PCT/JP2018/023633
(87) International publication number: WO 2019/009090

(56) References cited:
- JP-A- 2005 110 034
- JP-A- 2012 222 798
- JP-A- 2015 100 073
- JP-A- 2015 115 844
- JP-A- 2016 192 714
- US-A1- 2002 169 606
- US-B1- 9 386 137

## Description

### Technical Field

The present disclosure relates to a telephone system, a telephone set, a telephone transfer method, and a non-transitory computer readable medium. In particular, the present disclosure relates to a telephone system for transferring a call from one telephone to another telephone, a telephone set used in such a telephone system, a telephone transfer method in a telephone system, and a computer program.

### Background Art

There is a known related technique for displaying a caller's telephone number on a telephone set when an incoming call is received. By displaying the telephone number on the telephone set when an incoming call is received, a receiver can recognize the caller's telephone number before answering the incoming call. For example, when the displayed telephone number is a customer's telephone number, the receiver can recognize that the incoming call is a call from the customer before answering the incoming call. When the displayed telephone number is an unknown telephone number, the receiver can answer the incoming call while exercising caution as it may be a solicitation or fraud call. Alternatively, the receiver may choose not to answer the incoming call.

Commonly, the caller's telephone number is displayed on the received telephone set, and when the call is transferred, the caller's telephone number is not displayed on a transfer destination telephone set. On the other hand, there are some known techniques for notifying the transfer destination telephone set of the caller's telephone number and displaying the caller's telephone number. For example, Patent Literature 1 discloses a technique of receiving a caller's telephone number when an external incoming call is received, transmitting the caller's telephone number to a transfer destination telephone set when the external incoming call is transferred to the transfer destination, and displaying the caller's telephone number on a display unit of the transfer destination telephone set. Further, Patent Literature 2 discloses a technique of, when an incoming call received using a telephone set for incoming calls is transferred using a telephone set for transferring calls to a transfer destination telephone set, displaying a telephone number received by the telephone set for incoming calls on the transfer destination telephone set.

### Citation List

### Patent Literature

Patent Literature 1: Japanese Unexamined Patent Application Publication No. H10-65765
Patent Literature 2: Japanese Unexamined Patent Application Publication No. 2001-298506
Patent Literature 3: Japanese Unexamined Patent Application Publication No. H03-165155
US 2002/169606 A1 discloses an apparatus, system and method for providing speech recognition assist in call handover.
US 9 386 137 B1 discloses a method and apparatus of processing a voice call.

### Summary of Invention

### Technical Problem

Commonly, a receiver who answers an incoming call hears a name or a company name given by a caller who is a call partner at the time of answering, and recognizes from whom the incoming call came. At this time, the receiver may not be able to hear the caller's voice well due to problems such as how the caller talks or noises around the receiver side. When the receiver could not hear, for example, the caller's name, the receiver has been asking again for the caller's name and the like. Alternatively, at a workplace when the receiver answers an incoming call and transfer it to someone else, the receiver has been uncertainly giving, to a transfer destination, a call partner's name and the like without asking again for the call partner's name.

For example, there are cases in which the receiver cannot hear the beginning of the caller's talk, "This is B from A", and can only hear an important part of the message, "May I speak to Mr. X?". In that case, the receiver may hesitate to ask again for the caller's name and transfer the call to Mr. X saying "I don't know who this is, but it's for you". Mr. X to whom the call is transferred would then answer the phone thinking "This may be a nuisance call" without knowing from whom the call is.

In Patent Literatures 1 and 2, the caller's telephone number is displayed on the transfer destination telephone set, and thus the person who has received the transferred call can know the caller's information to some extent. However, when the corresponding telephone number is not registered on a telephone directory or the like, the caller's name is not displayed, and it is difficult to immediately identify the caller from the telephone number. Moreover, only by displaying the caller's telephone number, for example, even when the caller's company name is known, it is unknown who at the company made the call. Furthermore, when the person who received the transferred call is not familiar with the telephone number, he/she cannot recognize from whom the call came.

Patent Literature 3 discloses a telephone set for hearing-impaired persons which recognizes a call partner's voice and displays recognized text data on a display device. When a receiver who answers an incoming call is using such a telephone set for hearing-impaired persons, the receiver would be able to know what a caller said, which the receiver has missed, by looking at the displayed text data. However, also in this case, the person who received the transferred call cannot know from whom the incoming call came unless information about a name and the like is provided from a transfer source.

An object of the present disclosure is, in light of the above circumstances, to provide a telephone system, a telephone set, a telephone transfer method, and a non-transitory computer readable medium which enable a user of a transfer destination telephone set to recognize from whom a call came.

### Solution to Problem

The present invention is defined by the independent claims. Preferred embodiments are specified in the dependent claims.

### Advantageous Effects of Invention

A telephone system, a telephone set, a telephone transfer method, and a non-transitory computer readable medium according to the present disclosure enable a user of a transfer destination telephone set to recognize from whom a call came.

### Brief Description of Drawings

Fig. 1 is a block diagram showing a schematic telephone system according to the present disclosure;
Fig. 2 is a block diagram showing a telephone system according to a first embodiment of the present disclosure;
Fig. 3 is a block diagram showing a configuration of a telephone set;
Fig. 4 is a sequence diagram showing an operation sequence in the telephone system;
Fig. 5 is a block diagram showing a telephone system according to a second embodiment not according to the invention and present for illustration purposes only; and
Fig. 6 is a block diagram showing a functional configuration of a computer device not according to the invention and present for illustration purposes only.

### Description of Embodiments

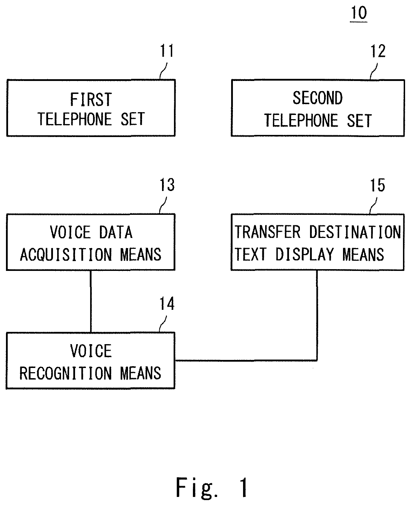

An overview of the present disclosure will be described prior to describing the embodiments of the present disclosure. Fig. 1 shows a schematic telephone system according to the present disclosure. The telephone system 10 includes a first telephone set 11, a second telephone set 12, voice data acquisition means 13, voice recognition means 14, and transfer destination text display means 15. The first telephone set 11 makes a call to another person (not shown). The second telephone set 12 is a telephone set to which a call made by the first telephone set is transferred. In other words, the user of the first telephone set uses the first telephone set to answer an incoming call from the other person, starts talking with the other person, and then transfers the call to the second telephone set.

The voice data acquisition means 13 acquires voice data of the other person in the call made by the first telephone set 11. The voice recognition means 14 performs voice recognition on the voice data acquired by the voice data acquisition means 13 and generates text data indicating a speech content of the other person. The transfer destination text display means 15 displays the text data generated by the voice recognition means 14 for the user of the second telephone set which is the transfer destination.

In the present disclosure, the voice data of the call partner in the call made by the first telephone set 11 is acquired, and the speech content of the call partner is voice-recognized. The voice-recognized speech content is converted into a text and displayed for the user of the transfer destination second telephone set 12. By doing so, even when the user of the first telephone set 11 misses information about the other person, for example, at the beginning of the talk, the user of the second telephone set 12 can know the content that the call partner has talked to the user of the first telephone set 11 before the call is transferred. Commonly, the call starts from telling the person's own name or the like, and thus the user of the second telephone set 12 can recognize who the call partner is by referring to the displayed text.

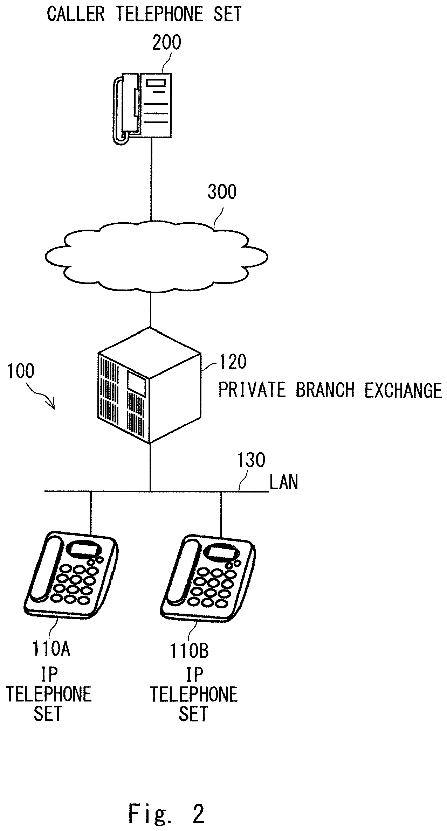

Hereinafter, embodiments of the present disclosure will be described in detail with reference to the drawings. Fig. 2 shows a telephone system according to a first embodiment of the present disclosure. The telephone system 100 includes a plurality of telephone sets 110A and 110B and a private branch exchange 120. Although Fig. 2 shows an example in which two telephone sets are included, three or more telephone sets may be included. Further, in the following descriptions, when there is no need to distinguish between the telephone sets 110A and 110B, these telephone sets are collectively referred to as the telephone set 110.

The telephone sets 110A and 110B are telephone sets used by the respective users. For the telephone sets 110A and 110B, for example, a land-line telephone set, a mobile telephone, and a VoIP (Voice over Internet Protocol) telephone using a PC (Personal Computer) can be used. Hereinafter, the telephone sets 110A and 110B will be described as IP (Internet Protocol) telephone sets.

The Private Branch exchange (PBX) 120 is connected to the plurality of telephone sets 110A and 110B via a LAN (Local Area Network) 130. The private branch exchange 120 is connected to a caller telephone set (external telephone set) 200 via a communication network 300 such as a Public Switched Telephone Network (PSTN), an IP network, or a mobile telephone network. The external telephone set 200 is a telephone set used by a caller who makes calls to the telephone set 110 in the system from outside the telephone system 100. For example, any telephone such as a land-line telephone set or a mobile telephone can be used as the external telephone set 200.

The private branch exchange 120 performs call control for controlling transmission and reception between the external telephone set 200 and the telephone sets 110A and 110B. When an external telephone call is made from the external telephone set 200, the private branch exchange 120 connects the telephone set 110 of the user who answered the incoming call to the external telephone set 200. The user (receiver) can transfer the call to another telephone set via the private branch exchange 120 after the user starts talking to the user (caller) of the external telephone set 200. In the following descriptions, mainly a case in which the user of the telephone set 110A answers the incoming call and then transfers it to the telephone set 110B will be described. In such a case, the telephone set 110A corresponds to a first telephone set 11 of Fig. 1, and the telephone set 110B corresponds to a second telephone set 12 of Fig. 1.

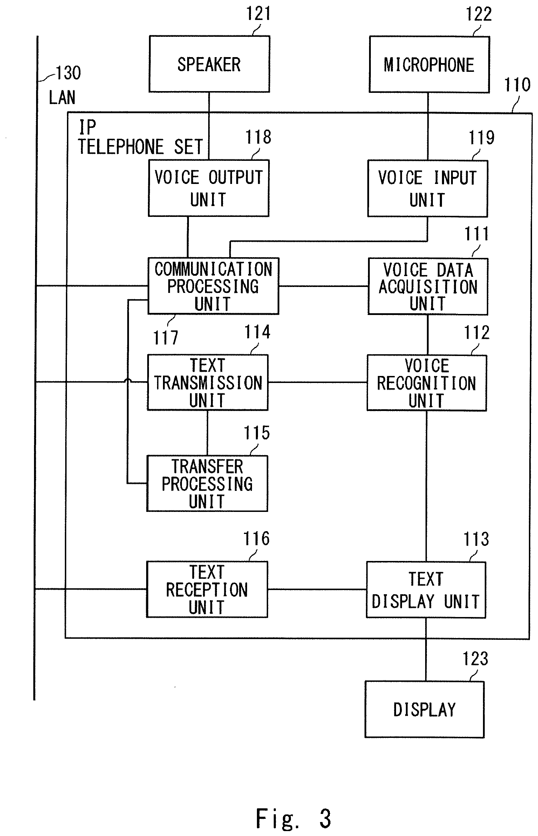

Fig. 3 shows a configuration of the telephone set 110. The telephone set 110 includes a voice data acquisition unit 111, a voice recognition unit 112, a text display unit 113, a text transmission unit 114, a transfer processing unit 115, a text reception unit 116, a communication processing unit 117, a voice output unit 118, and a voice input unit 119.

The communication processing unit 117 communicates with the other telephone sets 110 and the external telephone set 200 via the LAN 130 and the private branch exchange 120. The processing performed by the communication processing unit 117 includes processing related to a call to the call partner. The communication processing unit 117 acquires the voice data of the call partner transmitted from telephone set 110 or the external telephone set 200 of the call partner via the LAN 130 and the private branch exchange 120. The communication processing unit 117 outputs the call partner's voice from a speaker via the voice output unit 118. Further, the communication processing unit 117 acquires the voice data from the microphone 122 via the voice input unit 119, and transmits the voice data to the telephone set 110 or the external telephone set 200 of the call partner via the LAN 130 and the private branch exchange 120.

The voice data acquisition unit 111 acquires the voice data of the call partner from the communication processing unit 117. The voice recognition unit 112 performs the voice recognition on the voice data acquired by the voice data acquisition unit 111, and generates text data. For example, the voice recognition unit 112 performs the voice recognition on the voice data at the beginning of a call and converts the speech content of the beginning of the call into the text data. Any algorithm for converting the voice data into a text may be used for the voice recognition. The voice data acquisition unit 111 and the voice recognition unit 112 correspond to the voice data acquisition means 13 and the voice recognition means 14 in Fig. 1, respectively.

When the user of the telephone set 110 performs a transfer operation, the transfer processing unit 115 carries out processing for transferring a call being made by the communication processing unit 117 to the other telephone set 110. Further, the transfer processing unit 115 performs processing for accepting the transferred call from the other telephone set 110. When the transfer processing unit 115 transfers a call to the other telephone set 110, the text transmission unit 114 transmits the text data generated by the voice recognition unit 112 to the other telephone set 110 as a transfer destination via the LAN 130. The text reception unit 116 receives the text data transmitted from the text transmission unit 114 of the other telephone set 110 via the LAN 130.

The text display unit 113 displays the text data generated by the voice recognition unit 112 on a display (display device) 123 such as an LCD (Liquid Crystal Display) included in the telephone set 110. The text display unit 113 also displays the text data received by the text reception unit 116 on the display 123. The operation that the text display unit 113 displays the text data received by the text reception unit 116 corresponds to the operation of the transfer destination text display means 15 in Fig. 1.

In this embodiment, in the telephone system 100 (see Fig. 2), suppose that each telephone set 110 can transfer a call to another telephone set 110 or can receive a call transferred from another telephone set 110. The telephone system 100 may include a telephone set which transfers a call to another telephone set 110 but cannot receive a call transferred from another telephone set 110. In that case, the telephone set may not include the text reception unit 116. The telephone system 100 may also include a telephone set which can receive a call transferred from another telephone set but cannot transfer a call to another telephone set 110. In that case, the telephone set may not include the voice data acquisition unit 111, the voice recognition unit 112, and the text transmission unit 114.

In this embodiment, the processing (at least a part of the processing) carried out by the telephone set 110 or the like can be implemented by an ASIC (Application Specific Integrated Circuit), a DSP (Digital Signal Processor), an MPU (Micro Processing Unit) or a CPU (Central Processing Unit) included in the telephone set 110 or a computer system (not shown) including a combination of them. Specifically, the function of the telephone set 110 can be implemented by causing a computer system to execute a program including instructions on processes such as making a voice call, performing voice recognition, and displaying a text.

The above program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magnetooptical disks), CD-ROM (Compact Disk - Read Only Memory), CD-R (compact disc-recordable), CD-R/W (Compact Disc-ReWritable), and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

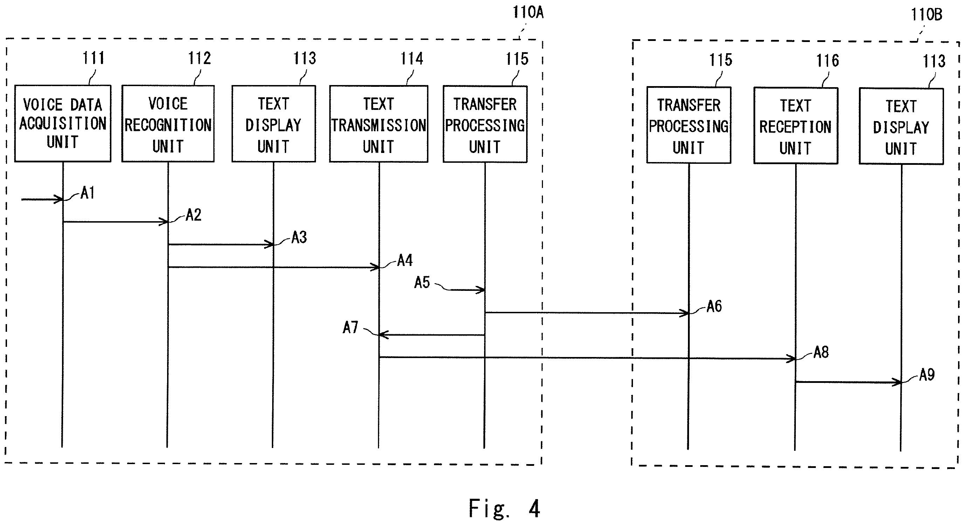

Fig. 4 shows an operation procedure at the time of a transfer. The voice data acquisition unit 111 of the telephone set 110A (see Fig. 2) acquires the voice data of the user (call partner) of the external telephone set 200 connected via the private branch exchange 120 (Step A1). The voice data acquisition unit 111 outputs the acquired voice data to the voice recognition unit 112 (Step A2). The voice recognition unit 112 recognizes the call partner's voice based on the voice data received from the voice data acquisition unit 111, and generates the text data. The voice recognition unit 112 performs the voice recognition on the call partner's voice, for example, within a predetermined time from the start of the call and generates the text data.

The voice recognition unit 112 outputs the converted text data to the text display unit 113 (Step A3). Further, the voice recognition unit 112 outputs the text data to the text transmission unit 114 (Step A4). The text display unit 113 displays the text data received from the voice recognition unit 112 on the display 123. The text data may not be displayed on the telephone set 110A which is a transfer source. Alternatively, the text data may not be displayed during normal operations, and instead may be output from the voice recognition unit 112 to the text display unit 113 when the user instructs the display 123 to display the text data.

The transfer processing unit 115 accepts the transfer operation performed by the user of the telephone set 110A for transferring the call (Step A5). Suppose that the user specifies the telephone set 110B as a transfer destination. The transfer processing unit 115 of the telephone set 110A notifies (indicates) the transfer processing unit 115 of the telephone set 110B that the call is to be transferred (Step A6). When the transfer processing unit 115 of the telephone set 110B receives the transfer notification from the telephone set 110A, the transfer processing unit 115performs transfer processing.

The transfer processing unit 115 of the telephone set 110A instructs the text transmission unit 114 to transmit the text data in parallel with the notification in Step A6 (Step A7). When the text transmission unit 114 of the telephone set 110A receives the instruction to transmit the text data, the text transmission unit 114 transmits the text data received from the voice recognition unit 112 to the telephone set 110B (Step A8). The text reception unit 116 of the telephone set 110B receives the text data transmitted from the telephone set 110A. The text reception unit 116 of the telephone set 110B outputs the received text data to the text display unit 113 (Step A9). The text display unit 113 of the telephone set 110B displays the received text data on the display 123 of the telephone set 110B.

In this embodiment, the voice data acquisition unit 111 of the transfer source telephone set 110A acquires the voice data of the call partner, and the voice recognition unit 112 converts the call partner's voice into the text data. Further, when the call is transferred to the telephone set 110B, the text transmission unit 114 transmits the text data indicating the speech content of the call partner to the transfer destination telephone set 110B. The text reception unit 116 of the telephone set 110B receives the text data from the transfer source telephone set 110A, and the text display unit 113 displays the text data.

In this embodiment, the voice recognition is performed on the call partner's voice, and the call partner's voice is converted into the text data. Commonly, this text data includes information such as the call partner's name he/she has given. In this embodiment, the telephone set 110A displays, on the display 123, the text data generated by performing the voice recognition on the voice data of the call partner. By doing so, even when the user of the telephone set 110A misses the call partner's name (caller), he/she can know the call partner's name by referring to the text data, and it is not necessary for him/her to ask again for the call partner's name. Further, when a call is transferred, it is possible to correctly tell the call partner's name to the user of the telephone set 110B to which the call is transferred, thereby promoting efficiency of the work.

Further, in this embodiment, the transfer destination telephone set 110B receives the text data transmitted from the transfer source telephone set 110A, and displays the text data on the display 123. The user of the transfer destination telephone set 110B can also know the information about the caller by referring to the text data displayed on the display 123. The user of the telephone set 110B can identify the caller even when, for example, the user of the transfer source telephone set 110A has not referred to the text data and does not correctly know the caller's name. Thus, in this embodiment, the user of the transfer destination telephone set 110B can identify the call partner before answering the transferred call.

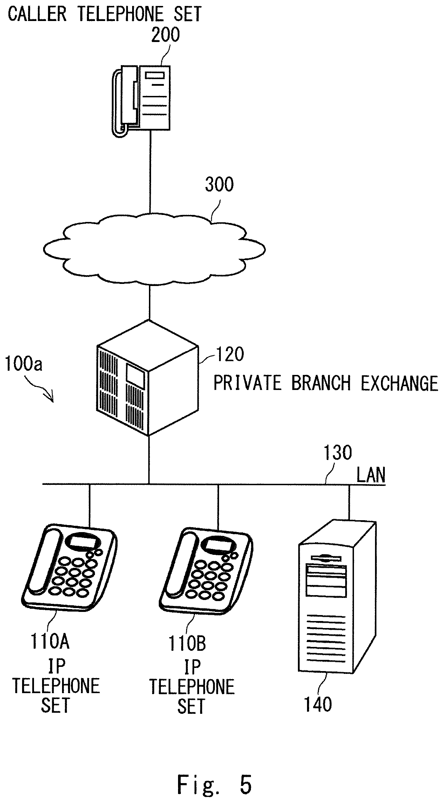

Fig. 5 shows a telephone system according to a second embodiment not according to the invention and present for illustration purposes only. A telephone system 100a according to this embodiment differs from the telephone system 100 according to the first embodiment shown in Fig. 2 in that the telephone system 100a further includes a PC (computer device) 140. The PC 140 is connected to telephone sets 110A and 110B and a private branch exchange 120 via the LAN 130. In the first embodiment, the telephone sets 110A and 110B include means for voice recognition, and the text data is generated inside the telephone set. In this embodiment, the PC 140 carries out processing such as the voice recognition.

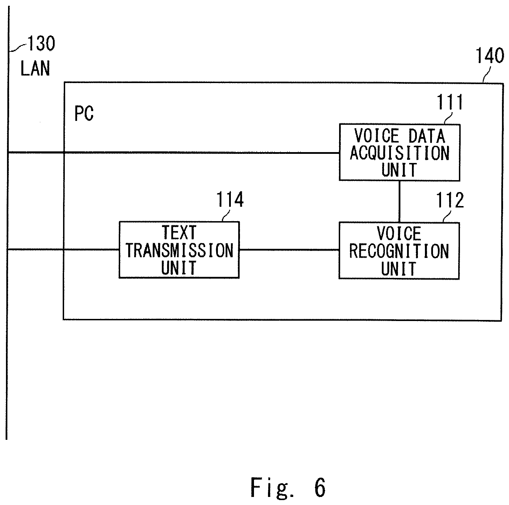

Fig. 6 shows a configuration of the PC 140 not according to the invention and present for illustration purposes only. The PC 140 includes a voice data acquisition unit 111, a voice recognition unit 112, and a text transmission unit 114. The voice data acquisition unit 111 acquires voice data of the call partner from, for example, the private branch exchange 120. Alternatively, the voice data acquisition unit 111 may acquire the voice data from the telephone set 110 that has received a call. The operations of the voice recognition unit 112 and the text transmission unit 114 may be similar to those described in the first embodiment. The function of each component in the PC 140 can be implemented by the PC 140 executing a dedicated application.

In this embodiment, the PC 140 performs the voice recognition and text data generation. With such a configuration, it is not necessary for each telephone set 110 to include the function for the voice recognition. As in this embodiment, even when the voice recognition and text data generation are performed outside the telephone set 110, the same effect as that of the first embodiment can be achieved by displaying the text data on the transfer source telephone set 110A and/or the transfer destination telephone set 110B.

Although only one PC 140 is shown in Fig. 5, the present disclosure is not limited to this. The telephone system 100 may include, for example, the PC 140 corresponding to each telephone set 110. In that case, for example, the PC 140 corresponding to the telephone set 110A may recognize the voice data of the call partner, generate text data, and display the generated text data on a monitor or the like used by the user of the telephone set 110A. Further, the PC 140 corresponding to the telephone set 110B may receive the text data from the PC 140 corresponding to the telephone set 110A, and display the received text data on a monitor or the like used by the user of the telephone set 110B.

In the above configuration, the voice recognition and the text data generation can be performed in each telephone set 110, and the text data can be displayed on a monitor of the PC 140. For example, the telephone set 110A may transmit the voice-recognized text data to the PC 140 corresponding to the telephone set 110A itself, and this PC 140 may display the text data on the monitor. Further, the telephone set 110A may transmit the text data to the PC 140 corresponding to the transfer destination telephone set 110B, and the PC 140 may display the text data on the monitor.

Although the present disclosure has been described with reference to the embodiments, the present disclosure is not limited to above. Various changes that can be understood by those skilled in the art within the scope of the present disclosure can be made to the configurations and details of the present disclosure, whose scope of protection is defined by the appended claims.

### Reference Signs List

- 10:: TELEPHONE SYSTEM
- 11, 12:: TELEPHONE SET
- 13:: VOICE DATA ACQUISITION MEANS
- 14:: VOICE RECOGNITION MEANS
- 15:: TRANSFER DESTINATION TEXT DISPLAY MEANS
- 100:: TELEPHONE SYSTEM
- 110:: TELEPHONE SET
- 120:: PRIVATE BRANCH EXCHANGE
- 130:: LAN
- 200:: EXTERNAL TELEPHONE SET
- 300:: COMMUNICATION NETWORK

## Claims

1. A telephone system comprising:
a first telephone set (11) configured to receive a call from another person;
a second telephone set (12) that is a transfer destination of the call;
voice data acquisition means (13) for acquiring voice data of the other person on the call received by the first telephone set (11);
voice recognition means (14) for performing voice recognition on the voice data acquired by the voice data acquisition means (13) within a predetermined time from a start of the call and generating text data based on the converted voice data; and
transfer destination text display means (15) for displaying the text data generated by the voice recognition means (14) for a user of the second telephone set (12),
wherein the first telephone set (11) includes the voice data acquisition means (13), the voice recognition means (14), and text data transmission means for transmitting the text data generated by the voice recognition means (14) to the second telephone set (12), wherein
the first telephone set (11) further comprises transfer processing means for performing processing to transfer the call to the second telephone set (12), and
wherein
when a user performs a transfer operation for transferring the call to the second telephone set (12), the transfer processing means instructs the text data transmission means to transmit the text data to the second telephone set (12).

2. The telephone system according to Claim 1, wherein
the second telephone set (12) includes a display device, and
the transfer destination text display means (15) displays the text data on the display device of the second telephone set (12).

3. The telephone system according to Claim 1 or 2, wherein the transfer destination text display means (15) displays the text data on an external device different from the second telephone set (12) used by the user of the second telephone set (12).

4. The telephone system according to any one of Claims 1 to 3, further comprising transfer source text display means for displaying the text data generated by the voice recognition means (14) for the user of the first telephone set (11).

5. The telephone system according to Claim 4, wherein
the first telephone set (11) includes a display device, and
the transfer source text display means displays the text data on the display device of the first telephone set (11).

6. The telephone system according to any one of Claims 1 to 5, further comprising a computer device configured to be communicable with the first telephone set (11) and the second telephone set (12) and including the voice data acquisition means (13) and the voice recognition means (14).

7. A telephone set comprising:
voice data acquisition means (13) for acquiring voice data of another person on a call;
voice recognition means (14) for performing voice recognition on the voice data acquired by the voice data acquisition means (13) within a predetermined time from a start of the call and generating text data based on the converted voice data;
transfer processing means for performing processing to transfer the call to a transfer destination telephone set;
text transmission means for transmitting the text data generated by the voice recognition means (14) to the transfer destination telephone set,
wherein when a user performs a transfer operation for transferring the call to the transfer destination telephone set, the transfer processing means instructs the text data transmission means to transmit the text data to the transfer destination telephone set.

8. The telephone set according to Claim 7, further comprising transfer source text display means for displaying the text data generated by the voice recognition means (14).

9. A telephone transfer method comprising:
acquiring, via a voice data acquisition means (13), voice data of another person on a call;
performing, via a voice recognition means (14), voice recognition on the acquired voice data within a predetermined time from a start of the call and generating text data based on the converted voice data;
performing processing, via a transfer processing means, to transfer the call to a transfer destination telephone set;
transmitting, via a text transmission means, the text data generated by the voice recognition means (14) to the transfer destination telephone set,
wherein when a user performs a transfer operation for transferring the call to the transfer destination telephone set, the transfer processing means instructs the text data transmission means to
transmit the generated text data to the transfer destination telephone set.

10. The telephone transfer method according to Claim 9, wherein the generated text data is displayed for a user of a transfer source telephone set.

11. A computer program comprising instructions which, when the program is executed by a computer, cause the computer to carry out the steps of:
acquiring, via a voice data acquisition means (13), voice data of another person on a call;
performing, via a voice recognition means (14), voice recognition on the acquired voice data within a predetermined time from a start of the call acquired by the voice data acquisition means (13) and generating text data based on the converted voice data;
performing processing, via a transfer processing means, to transfer the call to a transfer destination telephone set;
transmitting, via a text transmission means, the generated text data to the transfer destination telephone set,
wherein when a user performs a transfer operation for transferring the call to the transfer destination telephone set, instructing, via the transfer processing means, the text data transmission means to transmit the text data to the transfer destination telephone set.

12. The computer program according to Claim 11, further causing the computer to carry out the step of displaying the generated text data for a user of a transfer source telephone set.

## Patentansprüche

1. Telefonsystem, aufweisend:
ein erstes Telefongerät (11), das konfiguriert ist, einen Anruf von einer anderen Person zu empfangen;
ein zweites Telefongerät (12), das ein Weiterleitungsziel des Anrufs ist;
ein Sprachdatenerfassungsmittel (13) zum Erfassen von Sprachdaten der anderen Person bei dem Anruf, der durch das erste Telefongerät (11) empfangen wird;
ein Spracherkennungsmittel (14) zum Durchführen einer Spracherkennung für die Sprachdaten, die durch das Sprachdatenerfassungsmittel (13) innerhalb einer vorbestimmten Zeit ab einem Beginn des Anrufs erfasst wurden, und zum Erzeugen von Textdaten basierend auf den umgewandelten Sprachdaten; und
ein Weiterleitungsziel-Textanzeigemittel (15) zum Anzeigen der durch das Spracherkennungsmittel (14) erzeugten Textdaten für einen Nutzer des zweiten Telefongeräts (12),
wobei das erste Telefongerät (11) das Sprachdatenerfassungsmittel (13), das Spracherkennungsmittel (14) und ein Textdatenübertragungsmittel zum Übertragen der durch das Spracherkennungsmittel (14) erzeugten Textdaten an das zweite Telefongerät (12) aufweist,
wobei
das erste Telefongerät (11) ferner ein Weiterleitungsverarbeitungsmittel zum Durchführen einer Verarbeitung zum Weiterleiten des Anrufs an das zweite Telefongerät (12) aufweist, und
wobei
wenn ein Nutzer einen Weiterleitungsvorgang zum Weiterleiten des Anrufs an das zweite Telefongerät (12) durchführt, das Weiterleitungsverarbeitungsmittel das Textdatenübertragungsmittel anweist, die Textdaten an das zweite Telefongerät (12) zu übertragen.

2. Telefonsystem nach Anspruch 1, wobei
das zweite Telefongerät (12) eine Anzeigevorrichtung aufweist, und
das Weiterleitungsziel-Textanzeigemittel (15) die Textdaten auf der Anzeigevorrichtung des zweiten Telefongeräts (12) anzeigt.

3. Telefonsystem nach Anspruch 1 oder 2, wobei das Weiterleitungsziel-Textanzeigemittel (15) die Textdaten auf einer externen Vorrichtung anzeigt, die sich von dem zweiten Telefongerät (12) unterscheidet und durch den Nutzer des zweiten Telefongeräts (12) verwendet wird.

4. Telefonsystem nach einem der Ansprüche 1 bis 3, ferner aufweisend ein Weiterleitungsquellen-Textanzeigemittel zum Anzeigen der durch das Spracherkennungsmittel (14) erzeugten Textdaten für den Nutzer des ersten Telefongeräts (11).

5. Telefonsystem nach Anspruch 4, wobei
das erste Telefongerät (11) eine Anzeigevorrichtung aufweist, und
das Weiterleitungsquellen-Textanzeigemittel die Textdaten auf der Anzeigevorrichtung des ersten Telefongeräts (11) anzeigt.

6. Telefonsystem nach einem der Ansprüche 1 bis 5, ferner aufweisend eine Computervorrichtung, die konfiguriert ist, mit dem ersten Telefongerät (11) und dem zweiten Telefongerät (12) kommunikationsfähig zu sein, und das Sprachdatenerfassungsmittel (13) und das Spracherkennungsmittel (14) aufweist.

7. Telefongerät, aufweisend:
ein Sprachdatenerfassungsmittel (13) zum Erfassen von Sprachdaten einer anderen Person bei einem Anruf;
ein Spracherkennungsmittel (14) zum Durchführen einer Spracherkennung für die Sprachdaten, die durch das Sprachdatenerfassungsmittel (13) innerhalb einer vorbestimmten Zeit ab einem Beginn des Anrufs erfasst wurden, und zum Erzeugen von Textdaten basierend auf den umgewandelten Sprachdaten;
ein Weiterleitungsverarbeitungsmittel zum Durchführen einer Verarbeitung zum Weiterleiten des Anrufs an ein Weiterleitungsziel-Telefongerät;
ein Textübertragungsmittel zum Übertragen der durch das Spracherkennungsmittel (14) erzeugten Textdaten an das Weiterleitungsziel-Telefongerät,
wobei wenn ein Nutzer einen Weiterleitungsvorgang zum Weiterleiten des Anrufs an das Weiterleitungsziel-Telefongerät durchführt, das Weiterleitungsverarbeitungsmittel das Textdatenübertragungsmittel anweist, die Textdaten an das Weiterleitungsziel-Telefongerät zu übertragen.

8. Telefongerät nach Anspruch 7, ferner aufweisend ein Weiterleitungsquellen-Textanzeigemittel zum Anzeigen von durch das Spracherkennungsmittel (14) erzeugten Textdaten.

9. Telefonweiterleitungsverfahren, umfassend:
Erfassen von Sprachdaten einer anderen Person bei einem Anruf über ein Sprachdatenerfassungsmittel (13);
Durchführen einer Spracherkennung für die erfassten Sprachdaten innerhalb einer vorbestimmten Zeit ab einem Beginn des Anrufs und Erzeugen von Textdaten basierend auf den umgewandelten Sprachdaten über ein Spracherkennungsmittel (14);
Durchführen einer Verarbeitung zum Weiterleiten des Anrufs an ein Weiterleitungsziel-Telefongerät über ein Weiterleitungsverarbeitungsmittel;
Übertragen der durch das Spracherkennungsmittel (14) erzeugten Textdaten an das Weiterleitungsziel-Telefongerät über ein Textübertragungsmittel,
wobei wenn ein Nutzer einen Weiterleitungsvorgang zum Weiterleiten des Anrufs an das Weiterleitungsziel-Telefongerät durchführt, das Weiterleitungsverarbeitungsmittel das Textdatenübertragungsmittel anweist, die erzeugten Textdaten an das Weiterleitungsziel-Telefongerät zu übertragen.

10. Telefonweiterleitungsverfahren nach Anspruch 9, wobei die erzeugten Textdaten für einen Nutzer eines Weiterleitungsquellen-Telefongeräts angezeigt werden.

11. Computerprogramm, aufweisend Anweisungen, die, wenn das Programm durch einen Computer ausgeführt wird, den Computer veranlassen, die Schritte auszuführen des:
Erfassens von Sprachdaten einer anderen Person bei einem Anruf über ein Sprachdatenerfassungsmittel (13);
Durchführens einer Spracherkennung für die erfassten Sprachdaten innerhalb einer vorbestimmten Zeit ab einem Beginn des Anrufs, die durch das Sprachdatenerfassungsmittel (13) erfasst wurden, und Erzeugen von Textdaten basierend auf den umgewandelten Sprachdaten über ein Spracherkennungsmittel (14);
Durchführens einer Verarbeitung zum Weiterleiten des Anrufs an ein Weiterleitungsziel-Telefongerät über ein Weiterleitungsverarbeitungsmittel;
Übertragens der erzeugten Textdaten an das Weiterleitungsziel-Telefongerät über ein Textübertragungsmittel,
wobei wenn ein Nutzer einen Weiterleitungsvorgang zum Weiterleiten des Anrufs an das Weiterleitungsziel-Telefongerät durchführt, Anweisen des Textdatenübertragungsmittels über das Weiterleitungsverarbeitungsmittel, die Textdaten an das Weiterleitungsziel-Telefongerät zu übertragen.

12. Computerprogramm nach Anspruch 11, das ferner den Computer veranlasst, den Schritt des Anzeigens der erzeugten Textdaten für einen Nutzer eines Weiterleitungsquellen-Telefongeräts auszuführen.

## Revendications

1. Système téléphonique comprenant :
un premier ensemble téléphonique (11) configuré pour recevoir un appel d'une autre personne ;
un deuxième ensemble téléphonique (12) qui est une destination de transfert de l'appel ;
un moyen d'acquisition de données vocales (13) pour acquérir des données vocales de l'autre personne lors de l'appel reçu par le premier ensemble téléphonique (11) ;
un moyen de reconnaissance vocale (14) pour effectuer une reconnaissance vocale sur les données vocales acquises par le moyen d'acquisition de données vocales (13) dans une période de temps prédéterminée depuis un début de l'appel et pour générer des données de texte sur la base des données vocales converties ; et
un moyen d'affichage de texte de destination de transfert (15) pour afficher les données de texte générées par le moyen de reconnaissance vocale (14) pour un utilisateur du deuxième ensemble téléphonique (12),
dans lequel le premier ensemble téléphonique (11) comporte le moyen d'acquisition de données vocales (13), le moyen de reconnaissance vocale (14) et le moyen de transmission de données de texte pour transmettre les données de texte générées par le moyen de reconnaissance vocale (14) au deuxième ensemble téléphonique (12),
dans lequel
le premier ensemble téléphonique (11) comprend en outre un moyen de traitement de transfert pour effectuer un traitement pour transférer l'appel au deuxième ensemble téléphonique (12), et
dans lequel
lorsqu'un utilisateur effectue une opération de transfert pour transférer l'appel au deuxième ensemble téléphonique (12), le moyen de traitement de transfert ordonne au moyen de transmission de données de texte de transmettre les données de texte au deuxième ensemble téléphonique (12).

2. Système téléphonique selon la revendication 1, dans lequel le deuxième ensemble téléphonique (12) comporte un dispositif d'affichage, et le moyen d'affichage de texte de destination de transfert (15) affiche les données de texte sur le dispositif d'affichage du deuxième ensemble téléphonique (12).

3. Système téléphonique selon la revendication 1 ou 2, dans lequel le moyen d'affichage de texte de destination de transfert (15) affiche les données de texte sur un dispositif externe différent du deuxième ensemble téléphonique (12) utilisé par l'utilisateur du deuxième ensemble téléphonique (12).

4. Système téléphonique selon l'une quelconque des revendications 1 à 3, comprenant en outre un moyen d'affichage de texte source de transfert pour afficher les données de texte générées par le moyen de reconnaissance vocale (14) pour l'utilisateur du premier ensemble téléphonique (11).

5. Système téléphonique selon la revendication 4, dans lequel le premier ensemble téléphonique (11) comporte un dispositif d'affichage, et le moyen d'affichage de texte de source de transfert affiche les données de texte sur le dispositif d'affichage du premier ensemble téléphonique (11).

6. Système téléphonique selon l'une quelconque des revendications 1 à 5, comprenant en outre un dispositif informatique configuré pour pouvoir communiquer avec le premier ensemble téléphonique (11) et le deuxième ensemble téléphonique (12) et comportant le moyen d'acquisition de données vocales (13) et le moyen de reconnaissance vocale (14).

7. Ensemble téléphonique comprenant :
un moyen d'acquisition de données vocales (13) pour acquérir des données vocales d'une autre personne lors d'un appel ;
un moyen de reconnaissance vocale (14) pour effectuer une reconnaissance vocale sur les données vocales acquises par le moyen d'acquisition de données vocales (13) dans une période de temps prédéterminée depuis un début de l'appel et générer des données de texte sur la base des données vocales converties ;
un moyen de traitement de transfert pour réaliser le traitement pour transférer l'appel à un ensemble téléphonique de destination de transfert ;
un moyen de transmission de texte pour transmettre les données de texte générées par le moyen de reconnaissance vocale (14) à l'ensemble téléphonique de destination de transfert,
dans lequel lorsqu'un utilisateur effectue une opération de transfert pour transférer l'appel à l'ensemble téléphonique de destination de transfert, le moyen de traitement de transfert ordonne au moyen de transmission de données de textes de transmettre les données de texte à l'ensemble téléphonique de destination de transfert.

8. Ensemble téléphonique selon la revendication 7, comprenant en outre un moyen d'affichage de texte source de transfert pour afficher les données de texte générées par le moyen de reconnaissance vocale (14).

9. Procédé de transfert téléphonique comprenant :
l'acquisition, par l'intermédiaire d'un moyen d'acquisition de données vocales (13), de données vocales d'une autre personne lors d'un appel ;
la réalisation, par l'intermédiaire d'un moyen de reconnaissance vocale (14), d'une reconnaissance vocale sur les données vocales acquises dans une période de temps prédéterminée depuis un début de l'appel et la génération de données de texte sur la base des données vocales converties ;
la réalisation du traitement, par l'intermédiaire d'un moyen de traitement de transfert, pour transférer l'appel à un ensemble téléphonique de destination de transfert ;
la transmission, par l'intermédiaire d'un moyen de transmission de texte, des données de texte générées par le moyen de reconnaissance vocale (14) à l'ensemble téléphonique des destination de transfert,
dans lequel lorsqu'un utilisateur effectue une opération de transfert pour transférer l'appel à l'ensemble téléphonique de destination de transfert, le moyen de traitement de transfert ordonne au moyen de transmission de données de texte de transmettre les données de texte générées à l'ensemble téléphonique de destination de transfert.

10. Procédé de transfert téléphonique selon la revendication 9, dans lequel les données de texte générées sont affichées pour un utilisateur d'un ensemble téléphonique de source de transfert.

11. Programme informatique comprenant des instructions, qui, lorsque le programme est exécuté par un ordinateur, amènent l'ordinateur à réaliser les étapes :
d'acquisition, par l'intermédiaire d'un moyen d'acquisition de données vocales (13), de données vocales d'une autre personne lors d'un appel ;
de réalisation, par l'intermédiaire d'un moyen de reconnaissance vocale (14), d'une reconnaissance vocale sur les données vocales acquises dans une période de temps prédéterminée depuis un début de l'appel acquises par le moyen d'acquisition de données vocales (13) et de génération de données de texte sur la base des données vocales converties ;
de réalisation de traitement, par l'intermédiaire d'un moyen de traitement de transfert, pour transférer l'appel à l'ensemble téléphonique de destination de transfert ;
de transmission, par l'intermédiaire d'un moyen de transmission de texte, des données de texte générées à l'ensemble téléphonique de destination de transfert,
dans lequel, lorsqu'un utilisateur effectue une opération de transfert pour transférer l'appel à l'ensemble téléphonique de destination de transfert, d'ordonner, par l'intermédiaire du moyen de traitement de transfert, au moyen de transmission de données de texte de transmettre les données de texte à l'ensemble téléphonique de destination de transfert.

12. Programme informatique selon la revendication 11, amenant en outre l'ordinateur à réaliser l'étape d'affichage des données de texte générées pour un utilisateur d'un ensemble téléphonique de source de transfert.
